# EUROPÄISCHE PATENTSCHRIFT

(11) **EP 0 650 553 B1**
(45) Veröffentlichungstag und Bekanntmachung des Hinweises auf die Patenterteilung: **03.01.1996**
(21) Anmeldenummer: 93915922.4
(22) Anmeldetag: 15.07.1993
(51) Int. Cl.: F02B 33/44

(54) **KOLBENBRENNKRAFTMASCHINE**
PISTON INTERNAL-COMBUSTION ENGINE
MOTEUR A PISTONS

(30) Priorität: 17.07.1992 DE 4223500
(43) Veröffentlichungstag der Anmeldung: 03.05.1995
(73) Patentinhaber: RAPP, Manfred Max, W-22149 Hamburg (DE)
(72) Erfinder: RAPP, Manfred Max, W-22149 Hamburg (DE)
(74) Vertreter: Schaefer, Konrad, Dipl.-Phys.
(86) Internationale Anmeldenummer: EP9301863
(87) Internationale Veröffentlichungsnummer: WO9402723

(56) Entgegenhaltungen:
- DE-A- 3 737 743
- DE-A- 3 737 820
- FR-A- 2 593 231
- US-A- 4 696 158
- PATENT ABSTRACTS OF JAPAN vol. 014, no. 311 (M-0994) 4. Juli 1990 & JP-A-21 02 332 (HINO MOTORS LTD) 13. April 1990

## Beschreibung

Die Erfindung betrifft eine Kolbenbrennkraftmaschine der im Oberbegriff des Anspruches 1 genannten Art.

Derartige Kolbenbrennkraftmaschinen sind aus der DE-A-3 737 743 und der US-A-4 696 158 bekannt. Der im Druckspeicher gehaltene Druckluftvorrat dient zum Anlassen der Brennkraftmaschine und wird in Beschleunigungsphasen kurzfristig zur Erhöhung des Ladedruckes der selbstverdichtenden Expansionskammern verwendet.

Weiterhin sind in
DE-GM 90 02 335
DE-GM 90 13 928
Kolbenbrennkraftmaschinen mit Fremdverdichtung beschrieben.

Bei derartigen Kolbenbrennkraftmaschinen sind eine oder mehrere Expansionskammern vorgesehen, denen auf Zünddruck komprimierte Luft sowie Kraftstoff zum Zeitpunkt des Expansionsbeginnes zugeführt werden. Die Expansionskammern treiben wenigstens eine getrennt vorgesehene Kompressionskammer, die die benötigte Druckluft mit dem erforderlichen Druck liefert, wobei die Druckluft über eine Überführungseinrichtung gesteuert zum richtigen Zeitpunkt den Expansionskammern zugeführt wird. Zur Steuerung sind beispielsweise geeignete Ventile vorgesehen. Zur Kraftstoffzufuhr sind beispielsweise Einspritzdüsen vorgesehen, die direkt in die Expansionskammern oder in die Druckluftzufuhrrohre einspritzen. In den Expansionskammern sind ferner bei dem hier vorzugsweise anwendbaren Otto-Prinzip Zündeinrichtungen vorgesehen.

Werden derartige Kolbenbrennkraftmaschinen im nichtstationären Betrieb, beispielsweise in PKWs im Stadtbetrieb, verwendet, so ergeben sich die bekannten Nachteile von Brennkraftmaschinen, insbesondere von Otto-Motoren. Es liegt überwiegender Teillastbetrieb vor, bei dem unnötige Kompressionsarbeit geliefert wird, was zu niedrigem Wirkungsgrad führt. In häufigen kurzzeitigen Beschleunigungsphasen, z.B. beim Anfahren, werden ungünstige Motorbetriebszustände mit unvolltändiger Verbrennung und hohen Abgasemissionen benutzt, die auch mit Abgasreinigungstechniken nicht vollständig beherrschbar sind. Diese Nachteile gelten auch für die eingangs erwähnten gattungsgemäßen Konstruktionen.

Die Aufgabe der vorliegenden Erfindung besteht darin, eine Kolbenbrennkraftmaschine der eingangs genannten Art im Teillastbereich bei häufig wechselnden Betriebszuständen hinsichtlich des Brennstoffverbrauchs und der Abgasemissionen zu verbessern.

Diese Aufgabe wird erfindungsgemäß mit den Merkmalen des Kennzeichnungsteils des Anspruches 1 gelöst.

Bei der erfindungsgemäßen Konstruktion ist ein Druckspeicher vorgesehen, in dem im Teillastbereich überschüssig anfallende komprimierte Luft gespeichert werden kann. Wird bei entsprechender Ausbildung der Kompressionskammern das Druckniveau im Speicher hoch gewählt, so läßt sich ein erheblicher Energieinhalt speichern, der bei Druckluftbetrieb der Expansionskammern für den größten Teil der Beschleunigungsphasen und einen Teil der Konstantfahrphasen einsetzbar ist. Da somit für Beschleunigungsphasen im Stadtverkehr selten Brennstoffbetrieb erforderlich ist, werden die gerade dann sehr ungünstigen Verbrauchswerte und hohen Schadstoffemissionen vermieden. Dadurch kann beispielsweise in einem PKW im Stadtverkehr erheblich Brennstoff eingespart und der größte Teil der Schadstoffemissionen vermieden werden. Die erforderliche, relativ komplex auszubildende Steuereinrichtung kann mit heutigen technischen Mitteln, z.B. mit Computerunterstützung, geeigneten Ventilen und Druckregeleinrichhtungen preiswert und zuverlässig hergestellt werden, wie moderne elektronische Motor- und Getriebemanagementsysteme zeigen. Dabei stellt die Steuereinrichtung sicher, daß der Kolbenbrennkraftmaschine beim Brennstoffbetrieb Druckluft für die Expansionskammern zum erforderlichen Druck von beispielsweise 10 bis 15 bar (bei Dieselbetrieb entsprechend höher) zur Verfügung gestellt wird und daß im Teillastbereich anfallende überschüssige Druckluft oder beim Motorbremsbetrieb anfallende Druckluft auf höherem Druckniveau von beispielsweise 60 bar gespeichert wird. Für Beschleunigungsphasen kann Druckluft die Expansionskammern allein antreiben, wobei die Motorleistung der im Normalbetrieb mit Brennstoff entspricht oder bedarfsweise sogar höher ausgelegt sein kann. Es ergeben sich also keine Betriebsnachteile. Das Drehmoment der Maschine ist gleich oder bedarfsweise sogar höher wie im Brennstoffbetrieb. Die Maschine kann nach Aufladung des Druckspeichers, beispielsweise bei stehendem PKW vor einer Ampel, ausgeschaltet sein und allein mit Druckluft bis zum Erreichen der Stadthöchstgeschwindigkeit von z.B. 50 km/h mit voller Kraft beschleunigen. Durch die vorliegende Erfindung werden alle bekannten PKW-Abgastests in Europa, USA oder Japan ohne die bekannten teuren technischen Hilfsmittel, wie z.B. Katalysatoren erfüllt. Der Druckspeicher bietet die üblichen Vorteile eines Energiespeichers. Er kann beispielsweise Druck über Nacht speichern, so daß das Anfahren am nächsten Morgen im Durckluftbetrieb erfolgen kann. Ein Vorteil des Druckspeichers dabei ist auch, daß er sich ohne weiteres fremd aufladen läßt, z.B. nachts mit einem kleinen externen Kompressor, der in der Garage aufgestellt ist. Ferner besteht bei Verwendung des Druckspeichers auch der Vorteil, von Zeit zu Zeit Preßluftladestationen anfahren zu können, um den Druckspeicher extern aufzuladen. Damit kann beispielsweise in emmissionsfrei zu haltenden Gebieten weitgehend oder völlig auf Brennstoffbetrieb des Motors verzichtet werden.

Vorteilhaft sind die Merkmale des Anspruches 2 vorgesehen. Mit getrennt betreibbaren Druckspeicherteilen lassen sich wechselnde Betriebszustände, z.B. beim Stadtverkehr eines PKWs, besser beherrschen, wobei nach Entleeren eines Druckspeicherteiles in den übrigen Druckspeicherteilen noch voller Druck zur Verfügung steht.

Weiterhin vorteilhaft sind die Merkmale des Anspruches 3 vorgesehen. Hierdurch läßt sich durch Aufheizen der gespeicherten Druckluft durch die Motorabgase der Gasdruck und somit der Energieinhalt des Druckspeichers erhöhen, so daß längerer Luftbetrieb der Maschine möglich ist.

Weiterhin vorteilhaft sind die Merkmale des Anspruches 4 vorgesehen. Auf diese Weise lassen sich die Leistungsverluste beim Abblasen von Druckluft, wenn der Druckspeicher voll ist, verringern, da diese Verluste von der Höhe des Abblasdruckes abhängig sind.

Mit der erfindungsgemäßen Konstruktion lassen sich Automobilmotoren im Stadtverkehr, z.B. gemäß Europa-Testzyklus, sehr sparsam und abgasarm betreiben.. In Verzögerungs- und Standphasen, in denen ein Motorlauf nicht benötigt wird, ist der Motor automatisch abgeschaltet. In Verzögerungsphasen wird die Verzögerungsenergie zum Aufladen des Druckluftspeichers benutzt. Dabei wirkt der Motor als Motorbremse. Die genutzte Bremsenergie, mit der der Druckspeicher aufgeladen wird, gewinnt dabei unter Abzug von Verlusten die eingesetzte Beschleunigungsenergie im wesentlichen wieder.

Der Brennstoffverbrauch wird dabei eingeschränkt auf das Anlassen des Motors mit anschließendem Anfahren bis zur Betriebsbereitschaft des Druckluftspeichers, was beispielsweise 50 Sekunden benötigt. Danach wird nur noch in Konstantfahrphasen, also im Teillastbetrieb des Motors Brennstoff zum Fahren und zur Drucklufterzeugung benötigt, während für Zwischenbeschleunigungen und Anfahrvorgänge auf Druckluftmotorbetrieb umgeschaltet werden kann.

Im typischen Stadtverkehr beträgt der Leerlaufanteil des Motors ca. 30 %. Für Beschleunigungsphasen mit anschließendem kurzzeitigem Fahren mit konstanter Geschwindigketi über einige Sekunden, was im Druckluftmotorbetrieb erfolgen kann, fallen ca. 40 % an, so daß nur restliche etwa 30 % der Betriebszeit mit Brennstoffverbrauch erfolgen.

Die Brennstoffersparnis kann bei 50 % bis 60 % liegen. Die Mehrleistung für den Kompressorbetrieb liegt beispielsweise bei 10 % bis 20 %.

Abgasschadstoffemissionen werden nachhaltig gesenkt, insbesondere bezüglich NOₓ, CO₂, CO und HC.

Da im Druckluftmotorbetrieb auch die Geräuschemission wesentlich verringert ist, ergibt sich eine Verringerung der mittleren Geräuschbelästigung.

Auf den Einsatz von Katalysatoren kann verzichtet werden, da die Schadstoffemission mit der Erfindung den gesetzlichen Bestimmungen entsprechend ausreichend gesenkt wird.

In den Zeichnungen ist die Erfindung beispielsweise und schematisch dargestellt. Es zeigen:
- Fig. 1: das schematische Blockdiagramm einer erfindungsgemäßen Kolbenbrennkraftmaschine mit Steuereinrichtung,
- Fig. 1.1 bis 7: unterschiedliche Schaltstellungen der Steuereinrichtung für verschiedene Betriebszustände,
- Fig. 8: eine Ausführungsvariante der Fig. 1 für getrennte Steuerbarkeit der Druckluftleitungen verschiedener Kompressionskammern,
- Fig. 9: eine Ausführungsvariante gemäß Fig. 1 mit unterteilten Druckspeicher,
- Fig. 10 und 10.1: Ausführungsvarianten gemäß der Fig. 1 mit von Abgas beheizten Druckspeichern,
- Fig. 11: ein Geschwindigkeits/Zeitdiagramm (Fahrkurve des ECE/EG-Abgastestzyklus) für ein Kraftfahrzeug im Stadtbetrieb und
- Fig. 12: in Darstellung gemäß Fig. 11 einen erweiterten, zukünftigen Europa-Abgasttestzyklus

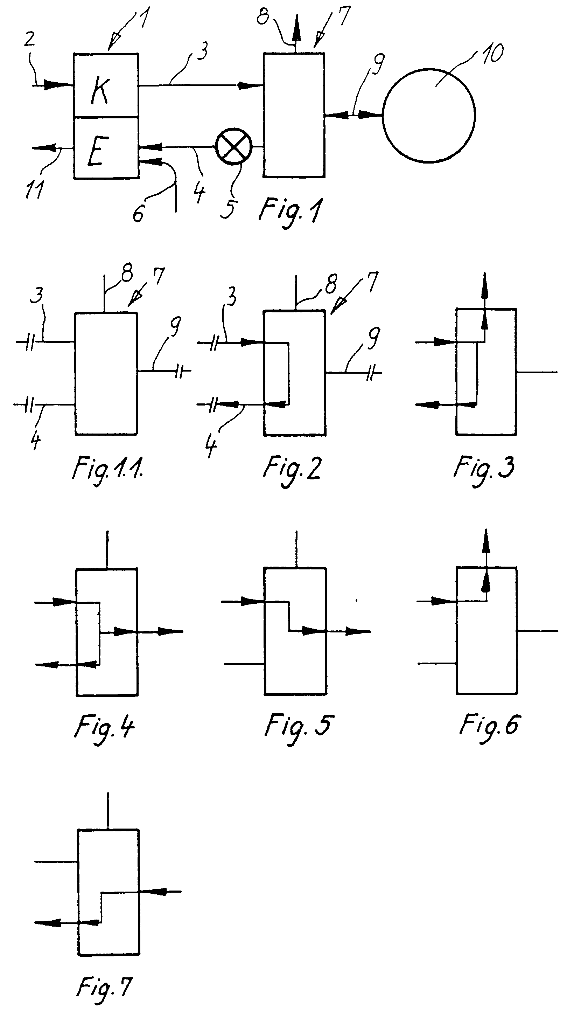

Fig. 1 zeigt schematisch in einer Blockdarstellung eine erfindungsgemäße Kolbenbrennkraftmaschine 1. Diese besitzt einen Kompressorteil K und einen Expansorteil E, wie schematisch dargestellt. Der Kompressorteil K saugt Luft über einen Einlaß 2 an und gibt komprimierte Druckluft über eine Druckluftausgangsleitung 3 ab. Dem Expansorteil E wird Druckluft über eine Drucklufteingangsleitung 4 zugeführt, in der eine Drosselklappe 5 zur Leistungsregelung vorgesehen ist. Dem Expansionsteil E wird ferner Brennstoff über eine Einspritzleitung 6 zugeführt, die entweder in die Drucklufteingangsleitung 4 oder direkt in die Expansionskammern einspritzt.

Der Aufbau einer solchen Kolbenbrennkraftmaschine 1 ist in unterschiedlichen Varianten im DE-GM 90 02 335 und im DE-GM 90 13 928 bzw. in der Patentanmeldung P 42 18 847.4 beschrieben, auf die Bezug genommen wird.

Nach der DE-P 42 18 847.4, deren Konstruktion besonders für die vorliegende Erfindung geeignet ist, weist die Kolbenbrennkraftmaschine 1 in einer oder mehreren scheibenförmigen Arbeitsräumen parallelrotierend umlaufende Kolben auf, die jeweils auf Kurbeln zweier paralleler winkelsynchron umlaufender Kurbelwellen gelagert sind, wobei jeder Punkt eines solchen Kolbens auf Kreisen mit dem Kurbelradius umläuft. Im Kolben sind eine oder mehrere halbkreisförmige Arbeitsflächen ausgebildet, die jeweils mit einer ebenfalls halbkreisförmig im Gehäuseumfang vorgesehenen Kammer mit Dichtleisten zusammenarbeiten, die als Expansionskammer oder Kompressionskammer ausgebildet sein kann. Vorzugsweise arbeitet eine Kolbenfläche mit zwei benachbarten Umfangsflächen zusammen, die eine Expansionskammer und eine Kompressionskammer bilden. Die Druckluftausgangsleitungen der Kompressionskammern sind in Fig. 1 zusammengefaßt schematisch mit 3 angegeben. Die Drucklufteingangsleitungen der Expansionskammern sind in der Fig. 1 schematisch zusammengefaßt mit 4 dargestellt.

Es können auch abweichende Motorkonstruktionen verwendet werden, beispielsweise herkömmliche Hubkolbenkonstruktionen. Beispielsweise kann der Expansionsteil der Kolbenbrennkraftmaschine 1 einen oder mehrere im Zweitaktverfahren betriebene Zylinder mit Kolben aufweisen mit Einlaßventilsteuerungen, die Druckluft aus der Drucklufteingangsleitung 4 jeweils im Zeitbereich des oberen Kolbentotpunktes zu Beginn des Expansionshubes einläßt, zu welchem Zeitpunkt auch über die Einspritzleitung 6 Kraftstoff zugegeben und bei Otto-Betrieb über eine Zündeinrichtung gezündet wird.

Als Kompressionsteil K kann hierbei ein angeflanschter herkömmlicher Hochdruckkompressor, beispielsweise ein mehrstufiger Kolbenkompressor, mit größerem Niederdruckkolben und kleinerem Hochdruckkolben versehen werden. Dieser kann auch mit dem Expansionsteil integriert ausgebildet sein, beispielsweise in Form eines Sechszylinders mit vier Expansionszylindern und zwei unterschiedlich großen Kompressionszylindern.

Die Einrichtung zur Überführung der komprimierten Luft von den Kompressionskammern zu den Expansionskammern weist, wie dargestellt, die Druckluftausgangsleitung 3 und die Drucklufteingangsleitung 4 auf, nicht dargestellte Ein- und Auslaßventile sowie eine Steuereinrichtung 7, dic n der Figur nur schematisch als Kasten dargestellt ist. An diese Steuereinrichtung 7 sind die Druckluftausgangsleitung 3 und die Drucklufteingangsleitung 4 angeschlossen, ferner eine Abblasleitung 8 für überschüssige Druckluft sowie eine Speicherleitung 9, die zu einem Druckspeicher 10 führt, beispielsweise einem entsprechend druckfest ausgebildeten Lufttank.

Die Steuereinrichtung 7 wird beispielsweise von einem Computer gesteuert, der mit geeigneten Temperatur-, Druck-, Drehzahl-, Geschwindigkeits- sowie gegebenenfalls weiteren Sensoren den Betriebszustand der Kolbenbrennkraftmaschine 1 und den Fahrzustand eines Kraftwagens, in den die Kolbenbrennkraftmaschine 1 eingebaut ist, überwachen kann und in Abhängigkeit von diesen Betriebszuständen die Druckluft unterschiedlich behandelt entsprechend den international verschiedenen Abgastests, wie in den nachfolgenden Figuren dargestellt.

Fig. 1.1 zeigt die Schaltstellung der Steuereinrichtung 7 bei abgeschaltetem Motor, z.B. vor einer Ampel oder in Parkstellung des Fahrzeuges. Alle Zu- und Abgänge sind von der Steuereinrichtung 7 gesperrt.

Fig. 2 zeigt die Schaltstellung der Steuereinrichtung 7 bei Vollastbetrieb der Kolbenbrennkraftmaschine 1, beispielsweise beim Fahren eines Kraftfahrzeuges mit Höchstgeschwindigkeit. Dann wird die gesamte, vom Kompressorteil K gelieferte Druckluft zum Betrieb des Expansionsteiles E benötigt. Wie in Fig. 2 dargestellt, verbindet bei diesem Betriebszustand die Steuereinrichtung 7 die Druckluftausgangsleitung 3 unmittelbar mit der Drucklufteingangsleitung 4.

Fig. 3 zeigt die Schaltstellung der Steuereinrichtung 7 bei längerem konstantem Teillastbetrieb, beispielsweise beim Fahren eines Kraftfahrzeuges über längere Strecke mit konstanten 50 km/h. Der Druckspeicher ist gefüllt. Dann wird ein geringerer Teil der von der Druckluftausgangsleitung 3 gelieferten Druckluft für den Expansionsteil 4 benötigt. Überschüssige Druckluft wird über die Abblasleitung 8 abgeblasen. Die Steuereinrichtung 7 ist derart ausgebildet, daß das Abblasen von Druckluft auf möglichst niedrigem Druckniveau erfolgt. Andererseits muß der Druck zum Betrieb des Expansionsteiles E auf einem Druckniveau gehalten werden, der dem Luftdruck zu Beginn des Expansionshubes entspricht, also beispielsweise bei 10 bis 15 bar. Zur vereinfachten Ausbildung der Steuereinrichtung 7 kann mit diesem Druck abgeblasen werden.

Fig. 4 zeigt die Schaltstellung der Steuereinrichtung 7 bei einem Betriebszustand im Teillastbereich, bei dem der Druckspeicher 10 noch leer oder nicht restlos gefüllt ist. Ein Teil der Druckluft wird dem Expansionsteil 4 zugeführt. Ein anderer Teil der Druckluft wird dem Druckspeicher 10 über die Speicherleitung 9 zugeführt. Die Steuereinrichtung 7 ist dabei (zur zeichnerischen Vereinfachung in der Figur nicht dargestellt) so auszubilden, daß der Speicherleitung 9 Druck auf höherem Druckniveau von beispielsweise 60 bar, der Drucklufteingangsleitung 4 aber Druckluft auf dem für den Betrieb des Expansionsteiles erforderlichen Druckniveau von etwa 10 bis 15 bar zugeführt wird. Dazu kann beispielsweise eine Druckreduziereinrichtung vorgesehen sein.

Fig. 5 zeigt die Schaltstellung der Steuereinrichtung 7 für einen Betriebszustand, bei dem der Kompresssorteil K Druckluft liefert, der Expansionsteil E aber keine Druckluft benötigt, beispielsweise beim Abbremsen der Kolbenbrennkraftmaschine, also bei einem Bremsmanöver eines Fahrzeuges. In diesem Fahrzustand wird der Kompressor als Motorbremse genutzt. Dann wird die erzeugte Druckluft bei nicht vollständig gefülltem Druckspeicher 10 allein diesem zugeführt bzw., wenn dieser voll ist, gemäß Schaltstellung der Fig. 6 abgeblasen.

Fig. 7 zeigt eine Schaltstellung der Steuereinrichtung 7 für einen Betriebszustand, bei dem der Druckspeicher 10 ausreichend gefüllt ist und die Kolbenbrennkraftmaschine 1 erhöhten Leistungsbedarf hat, beispielsweise bei einem Beschleunigungsvorgang eines Kraftfahrzeuges. Nun wird Druckluft aus dem Druckspeicher 10 dem Expansionsteil E zugeführt. Die Steuereinrichtung 7 sorgt hierbei dafür, daß Brennstoffzufuhr aus der Einspritzleitung 6 abgeschaltet ist. Die Expansionskammern des Expansionsteiles E werden nun allein mit Druckluft im Druckluftmotorbetrieb betrieben. Nicht dargestellte Druckreduziereinrichtungen der Steuereinrichtung 7 können dabei den höheren Vorratsdruck im Druckspeicher 10 auf den jeweils im Expansionsteil E benötigten Druck reduzieren.

Die Kompressionskammern des Kompressionsteiles K sind bei der Kolbenbrennkraftmaschine 1 der Fig. 1 so auszulegen, daß sie einen maximalen Kompressionsdruck erzeugen, der wesentlich höher liegt als zur Versorgung des Expansionsteiles erforderlich. Im hier erläuterten Fall des Otto-Motorbetriebes, benötigen die Expansionskammern bei Zündbeginn einen Luftdruck von etwa 10 bis 15 bar, der über die Drucklufteingangsleitung 4 zuzuführen ist, um bei Brennstoffzugabe ein für den Otto-Motorbetrieb zündfähiges Gemisch zu erhalten. Nach Zündung beträgt der maximale Druck in der Expansionskammer dann beispielsweise 40 bar.

Soll im Druckluftmotorbetrieb gemäß Schaltstellung der Steuereinrichtung 7 gemäß Fig. 7 der Motor mit derselben Leistung betreibbar sein, so muß ihm aus dem Speicher 10 Druckluft mit etwa 20 bis 30 bar in entsprechender Menge zugeführt werden. Die Kompressionskammern des Kompressionsteiles K sind daher auf einen maximalen Druck von ca. 60 bar auszulegen. Dabei richtet sich der tatsächlich erzeugte Enddruck in den Kompressionskammern nach der Drucksteuerung am Ende der Druckausgangsleitung 3, die in der Steuereinrichtung 7 vorgesehen ist. Wird beispielsweise gemäß Schaltstellung der Fig. 6 nur nach außen abgeblasen, so kann zur Erniedrigung von Verlusten ungedrosselt abgeblasen werden, so daß die Kompressionsverluste so gering wie möglich sind. Beim Betriebszustand gemäß Fig. 3 wird der maximale Kompressionsdruck auf z.B. 10 bis 15 bar begrenzt.

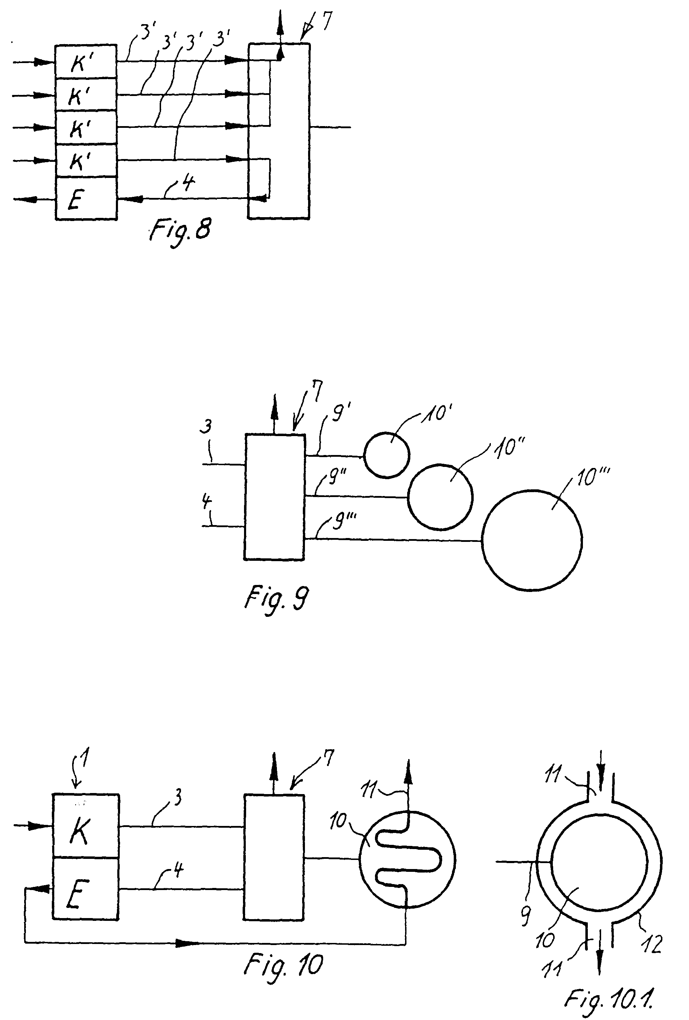

In Fig. 8 ist eine vorteilhafte Ausgestaltung angegeben, in der unterschiedliche Kompressionskammern K', wie dargestellt, separat mit parallelen Druckluftausgangsleitungen 3' an die Steuereinrichtung 7 angeschlossen sind. Im dargestellten Betriebszustand bei sehr niedriger Dauerteillast wird nur eine der Kompressionskammern K' zur Versorgung des Expansionsteiles E an diesen angeschlossen. Die übrigen drei dargestellten Kompressionskammern werden ungedrosselt abgeblasen. Erhöht sich der Leistungsbedarf der Kolbenbrennkraftmaschine 1, so können weitere Kompressionskammern zur Versorgung des Expansionsteiles angeschlossen werden, bis schließlich bei Vollgas sämtliche Kompressionskammern zur Versorgung des Expansionsteiles E geschaltet werden. Ist der Druckspeicher 10 noch nicht restlos gefüllt, so können die Druckausgangsleitungen 3' einzeln oder zu mehreren zum Auffüllen des Druckspeichers verbunden werden.

Fig. 9 zeigt eine Variante, bei der der Druckspeicher 10 in einzelne Druckspeicherteile 10', 10", 10"' unterschiedlicher Größe unterteilt ist, die über einzelne Speicherleitungen 9', 9", 9"' an die Steuereinrichtung 7 angeschlossen sind. Bei dieser Variante läßt sich der gespeicherte Druckgasvorrat besser verwalten. Es kann z.B. je nach Bedarf einer der Druckspeicher leergefahren werden, während die anderen auf vollem Druck gefüllt bleiben, um so bei plötzlich anfallendem hohem Leistungsbedarf zum reinen Druckluftmotorbetrieb gemäß Fig. 7 noch zur Verfügung zu stehen.

Fig. 10 zeigt schließlich eine Ausführungsvariante, bei der die Abgasleitung 11 des Expansionsteiles im Wärmeaustausch mit dem Druckspeicher 10 geführt ist. In der Figur ist dies dargestellt durch Anordnung eines Teiles der Abgasleitung 11 als Rohrschlange im Speicher 10. Fig. 10.1 zeigt dazu eine alternative Konstruktion mit Führung des Abgases der Abgasleitung 11 durch eine Ummantelung 12 des Druckspeichers 10.

Wird Luft beispielsweise mit einer Temperatur von 400° C aus dem Kompressorteil der Kolbenbrennkraftmaschine 1 dem Druckspeicher 10 bei einem Druck von z.B. 30 bar zugeführt und sodann über einige Zeit von den heißen Abgasen in der Abgasleitung 11 auf höhere Temperatur von beispielsweise 800° C gebracht, so erhöht sich der Druck im Speicher 10 erheblich auf beispielsweise 60 bis 80 bar, so daß der Energieinhalt des Speichers 10 sich vergrößert und zu einem längeren Druckluftmotorbetrieb des Expansionsteiles E der Kolbenbrennkraftmaschine 1 genutzt werden kann.

Die erfindungsgemäße Konstruktion ist besonders wirkungsvoll im wechselnden Teillastbereich, wie er beim Betrieb eines PKWs im Stadtverkehr vorliegt. Dabei wiederholen sich ständig die folgenden vier typischen Fahrzustände:
Beschleunigung aus dem Stand,
Konstantfahrphase,
Verzögerungsphase,
Stillstand (z.B. vor Ampel).
Mit der erfindungsgemäßen Konstruktion werden diese Fahrzustände durch entsprechende Schaltstellungen der Steuereinrichtung 7 berücksichtigt, die je nach Fahrzustand auf unterschiedliche Schaltstellungen der Fig. 1.1 bis 7 umschalten kann.

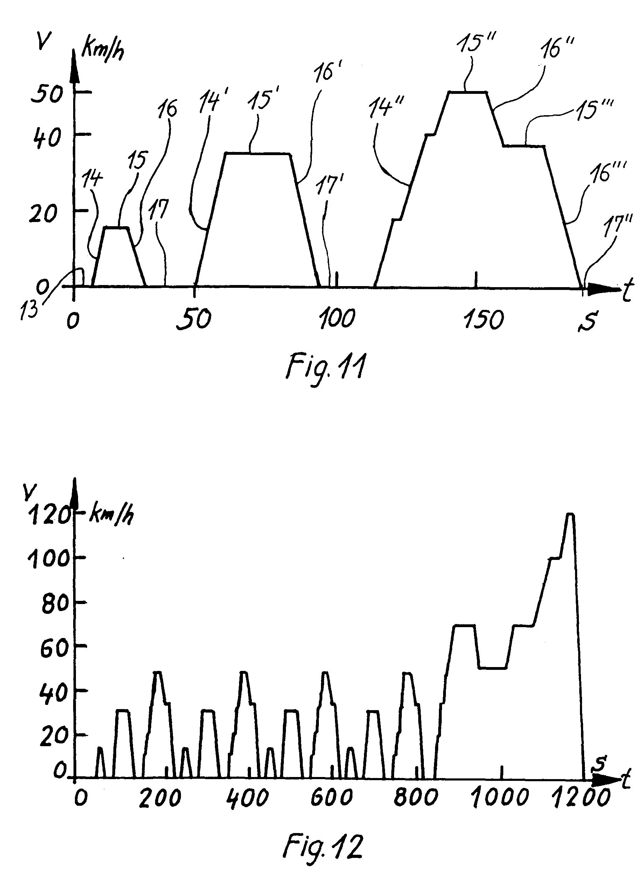

Zur näheren Erläuterung wird auf Fig. 11 Bezug genommen, die das Geschwindigkeitsdiagramm des ECE/EG Europa-Abgasttestzyklus wiedergibt, das bei der Motorkonstruktion als Simulatiton des Stadtverkehrs Verwendung findet. Das dargestellte Diagramm wird im Europa-Test jeweils viermal unmittelbar aufeinanderfolgend wiederholt. Dabei werden die Gesamtabgasemissionswerte bestimmt.

Im folgenden wird erläutert, wie die erfindungsgemäße Konstruktion bei den in Fig. 11 dargestellten Betriebszuständen arbeitet.

Bei 13 startet die im folgenden einfach als Motor bezeichnete Kolbenbrennkraftmaschine in kaltem Zustand mit leerem Druckspeicher 10 im Brennstoffbetrieb. Die Steuereinrichtung 7 schaltet auf die Schaltstellung gemäß Fig. 4. Es erfolgt ein Beschleunigungsvorgang bei 14, der in eine Konstantfahrphase 15 übergeht. Danach erfolgt eine Verzögerung 16, bei der die Steuereinrichtung 7 auf die Schaltstellung gemäß Fig. 5 schaltet. Es folgt eine Standphase 17 in Schaltstellung gemäß Fig. 1.1.

Nach ca. 50 Sekunden, gerechnet vom Start des Motors bei 13, ist der Druckspeicher 10 betriebsbereit aufgefüllt. Der Motor schaltet auf Druckluftbetrieb um, d.h. Kraftstoffzufuhr und Zündung werden ausgeschaltet.

Die nächste Beschleunigung bei 14' kann nun im reinen Luftbetrieb in Schaltstellung gemäß Fig. 7 erfolgen, wobei der Luftbetrieb auch noch über einen Zeitbereich der nachfolgenden Konstantfahrphase 15' von ca. 3 bis 5 Sekunden beibehalten werden kann. Danach erfolgt in der Konstantfahrphase 15' automatisch Umschaltung auf Benzinbetrieb gemäß Schaltstellung der Fig. 4, um die Luftverluste im Druckspeicher 10 wieder aufzufüllen.

Es wird dann wieder verzögert bei 16' unter Brennstoffabschaltung und Umschaltung in die Schaltstellung gemäß Fig. 5. Druckverluste im Druckspeicher 10 werden weiter aufgefüllt.

Bei 17' steht das Fahrzeug bei abgeschalteter Brennstoffzufuhr in Schaltstellung der Steuereinrichtung 7 gemäß Fig. 1.1. Danach erfolgt eine erneute Beschleunigung bei 14" im Luftbetrieb gemäß Schaltstellung der Fig. 7. Auch die nachfolgende Konstantfahrphase 15" erfolgt anfangs noch im Luftbetrieb. Die Verzögerungsphase 16" wird wieder zum Aufladen des Speichers 10 in der Schaltstellung gemäß Fig. 5 benutzt. Die nachfolgende Konstantfahrphase 15"' wird wiederum anfangs im Druckluftbetrieb und anschließend mit Brennstoff gefahren. Es erfolgt eine Verzögerung 16"' bis zum Stand bei 17". Diese Phasen 14"bis 17" werden genauso behandelt, wie bei 14' bis 17' beschrieben.

Beim viermaligen Ablauf der Fahrzustände der Fig. 11 gemäß Europa-Test folgt erneut die Beschleunigungsphase 14, die nun aber bei gefülltem Speicher 10 im Druckluftbetrieb gemäß Fig. 7 abläuft.

Fig. 12 zeigt einen weiteren Fahrzyklus, der als erweiterter zukünftiger Europa-Abgasttestzyklus vorgesehen ist. Er entspricht im Anfangsteil in viermaliger Wiederholung dem Testzyklus der Fig. 11, ist jedoch erweitert um einen anschließenden Bereich bei höheren Geschwindigkeiten. Auch hier kann beim Anfahren aus dem Stand sowie der Zwischenbeschleunigung im Druckluftbetrieb gefahren werden.

## Patentansprüche

1. Kolbenbrennkraftmaschine mit wenigstens einer jeweils aus Gehäuse und Kolben gebildeten Expansionskammer (E), mit wenigstens einer davon angetriebenen, getrennt vorgesehenen Kompressionskammer (K, K'), mit einer Einrichtung (3, 7, 4) zur gesteuerten Überführung komprimierter Luft von den Kompressionskammern (K, K') zu den Expansionskammern (E), die eine Steuereinrichtung (7) aufweist, welche den Expansionskammern (E) Luft unter dem erforderlichem Druck, zur Verfügung stellt, und mit einem Druckspeicher (10) zur Speicherung komprimierter Luft, wobei die Kompressionskammern (K, K') einen höheren als den erforderlichen Druck liefernd ausgebildet sind, **dadurch gekennzeichnet,**
daß die Kolbenbrennkraftmaschine derart ausgebildet ist, daß die komprimierte Luft den Expansionskammern (E) im wesentlichen zum Zeitpunkt des Expansionsbeginnes in diesen und mit dem in diesen dann erforderlichen Druck zugeführt wird, und
daß die Steuereinrichtung (7) aus überschüssiger Druckluft vorrangig den Druckspeicher (10) mit höherem Druck auffüllt sowie, wenn dieser voll ist, Luft auf niedrigerem Druckniveau abbläst und
wenigstens in Beschleunigungsphasen (14, 14', 14'') die Expansionskammern (E) unter deren Umschaltung auf Druckluftmotorbetrieb unmittelbar aus dem Druckspeicher (10) speist.

2. Kolbenbrennkraftmaschine nach Anspruch 1, **dadurch gekennzeichnet,** daß der Druckspeicher in gesondert betreibbare Teile (10', 10", 10'") unterteilt ist.

3. Kolbenbrennkraftmaschine nach einem der vorhergehenden Ansprüche, **dadurch gekennzeichnet,** daß der Druckspeicher (10) im Wärmeaustausch mit den Motorabgasen (Abgasleitung 11) ausgebildet ist.

4. Kolbenbrennkrafimaschine nach einem der vorhergehenden Ansprüche mit mehreren Kompressionskammern, **dadurch gekennzeichnet,** daß die Steuereinrichtung (7) derart ausgebildet ist, daß sie einzelne der Druckluftausgangsleitungen (3') der Kompressionskammern (K') ungedrosselt abblasen kann.

## Claims

1. Reciprocating engine with at least one expansion chamber (E) defined by a respective housing and piston, with at least one separately provided compression chamber (K,K') driven thereby, with a device (3,7,4) for the controlled transfer of compressed air from the compression chambers (K,K') to the expansion chambers (E), which has a control device (7) which provides the expansion chambers (E) with air at the necessary pressure, and with a pressure reservoir (10) for storing compressed air, the compression chambers (K,K') being constructed to supply a pressure higher than the necessary pressure, characterised in that the reciprocating engine is so constructed that the compressed air is supplied to the expansion chambers (E) substantially at the time of the beginning of expansion in them and at the pressure then necessary in them, and that the control device (7) fills the pressure reservoir (10) with excess compressed air at higher pressure as a matter of priority and, when it is full, blows off air at a lower pressure level and, at least in acceleration phases (14,14',14") supplies the expansion chambers (E) directly from the pressure reservoir (10) whilst switching them over to compressed air motor operation.

2. Reciprocating engine as claimed in claim 1, characterised in that the pressure reservoir is divided into separately operable portions (10',10",10"').

3. Reciprocating engine as claimed in one of the preceding claims, characterised in that the pressure reservoir (10) is constructed in heat exchange relationship with the engine exhaust gases (exhaust gas line 11).

4. Reciprocating engine as claimed in one of the preceding claims with a plurality of compression chambers, characterised in that the control device (7) is so constructed that it can blow off individual compressed air outlet lines (3') of the compression chambers (K') unthrottled.

## Revendications

1. Moteur à combustion interne à pistons avec au moins une chambre d'expansion (E) respectivement formée d'un carter et d'un piston, avec au moins une chambre de compression (K, K') manoeuvrée par celle-ci et prévue à part, avec un dispositif (3, 7, 4), prévu pour faire passer, sur commande, de l'air comprimé des chambres de compression (K, K') vers les chambres d'expansion (E), qui présente un dispositif de commande (7) qui met à disposition des chambres d'expansion (E) de l'air sous la pression nécessaire, et avec un accumulateur de pression (10) pour accumuler de l'air comprimé, les chambres de compression (K, K') étant conçues pour fournir une pression supérieure à la pression nécessaire, caractérisé
par le fait que le moteur à combustion interne à pistons est conçu de façon que l'air comprimé soit amené aux chambres d'expansion (E) sensiblement à l'instant du début de l'expansion dans ces chambres et le soit avec la pression alors nécessaire dans ces chambres et que le dispositif de commande (7) remplit prioritairement d'air comprimé en excès l'accumulateur de pression (10) avec une pression plus élevée et que, cet accumulateur étant plein, il évacue de l'air à un niveau de pression plus bas et
qu'au moins dans les phases d'accélération (14, 14', 14"), il alimente directement les chambres d'expansion (E) à partir de l'accumulateur de pression (10), les chambres d'expansion commutant sur l'exploitation en moteur à air comprimé.

2. Moteur à combustion interne à pistons selon la revendication 1, caractérisé par le fait que l'accumulateur de pression est divisé en parties exploitables à part (10', 10", 10"').

3. Moteur à combustion interne à pistons selon l'une des revendications précédentes, caractérisé par le fait que l'accumulateur de pression (10) est prévu avec échange thermique avec les gaz d'échappement du moteur (conduite 11 des gaz d'échappement).

4. Moteur à combustion interne à pistons selon l'une des revendications précédentes avec plusieurs chambres de compression, caractérisé par le fait que le dispositif de commande (7) est conçu de façon à pouvoir évacuer, sans présence d'un étranglement, séparément, différentes conduites (3') de sortie d'air comprimé des chambres de compression K'.
